(19) Europäisches Patentamt / European Patent Office / Office européen des brevets

(11) **EP 4 441 254 B1**

(12) **EUROPEAN PATENT SPECIFICATION**

(45) Date of publication and mention
of the grant of the patent:
**15.10.2025 Bulletin 2025/42**

(21) Application number: **22829845.1**

(22) Date of filing: **25.11.2022**

(51) International Patent Classification (IPC):
$C09D\ 189/00^{(2006.01)}$ $C08L\ 75/04^{(2006.01)}$
$C08L\ 91/06^{(2006.01)}$ $C09D\ 175/04^{(2006.01)}$
$C14C\ 11/00^{(2006.01)}$ $C08L\ 89/00^{(2006.01)}$
$C14C\ 9/00^{(2006.01)}$

(52) Cooperative Patent Classification (CPC):
(C-Sets available)
**C14C 11/003; C08L 75/04; C08L 89/005;**
**C09D 175/04; C09D 189/005; C14C 9/00;**
**C14C 11/006** (Cont.)

(86) International application number:
**PCT/IB2022/061420**

(87) International publication number:
**WO 2023/100047 (08.06.2023 Gazette 2023/23)**

(54) **MIXTURE AND METHOD FOR LEATHER TREATMENT**

MISCHUNG UND LEDERBEHANDLUNGSVERFAHREN

MÉLANGE ET PROCÉDÉ POUR LE TRAITEMENT DU CUIR

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **30.11.2021 IT 202100030317**

(43) Date of publication of application:
**09.10.2024 Bulletin 2024/41**

(73) Proprietor: **Conceria Nuvolari Srl**
**63833 Montegiorgio (FM) (IT)**

(72) Inventor: **SANTORI, Sara**
**63833 Montegiorgio (FM) (IT)**

(74) Representative: **IP Sextant s.r.l.**
**Via A. Salandra, n.18**
**00187 Rome (IT)**

(56) References cited:
EP-B1- 2 954 073    CN-A- 105 400 336
CN-A- 109 023 985    US-A- 5 759 706

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 75/04, C08L 91/06, C08L 89/005,
C08K 5/3412, C08K 3/042;
C08L 89/005, C08K 3/042, C08K 5/3412,**

**C08L 75/04, C08L 91/06;
C09D 175/04, C08L 91/06, C08L 89/005,
C08K 5/3412, C08K 3/042;
C09D 189/005, C08K 3/042, C08K 5/3412,
C08L 75/04, C08L 91/06**

**Description**

The present invention relates to a mixture for treatment of one leather layer and a respective treatment method, which gives the treated leather layer high characteristics of mechanical resistance, hygiene and softness to touch. The invention is set out in the appended set of claims.

Graphite, thanks to its chemical-physical characteristics, is one of the materials that has aroused much interest in the scientific community in recent years. In fact, from graphite graphene can be obtained, a "two-dimensional" material with a thickness equal to that of a single atom, very light and very resistant, currently considered the most resistant material among the known ones, even more resistant than diamond. Graphene is an excellent electricity conductor, it is transparent but also flexible, so it is currently used in many technical sectors, including the textile and leather processing sector. Graphene can make a fabric or leather treated therewith waterproof, highly conductive, and more resistant to mechanical stresses than untreated leather. An example of leather treatment methods using graphene is taught in CN 109023985. Other leather treatment methods according to the prior art are taught in CN 105400336, EP 2954073 and US 5759706.

However, leather worked with graphene suffers from some drawbacks.

Firstly, it is rough to the touch, so it is not always usable for the production of clothing, leather goods and footwear or for the production of coatings in the automotive sector, where the finished product is required to be soft to the touch. Leather worked with graphene is expensive, as the graphene production process has very high costs.

Furthermore, leather treated with graphene takes on a greyish color and this is a drawback, as in the sector, it is required that leather is produced in various colors.

Finally, various market researches indicate an ever-growing desire among the population for antibacterial products, therefore the need is felt to be able to produce improved leather, having high characteristics of attractiveness to the touch (softness) and to the eye, which is also antibacterial and more resistant to mechanical stress than traditional leather.

Accordingly, the object of the present invention is that of improving, in general, the state of the art in the leather processing sector and, in particular, providing one leather layer having high characteristics of mechanical resistance but also high characteristics of attractiveness to the touch (softness) and to the eye, as well as antibacterial characteristic.

Another object of the present invention is to provide one leather layer having high characteristics of mechanical resistance, attractiveness to the touch (softness) and to the eye, as well as antibacterial characteristic at reduced costs with respect to one graphene treated leather layer.

It is a specific object of the present invention a mixture for treatment of one leather layer having at least one surface S, comprising, per square meter of said surface S to be treated:

- distilled water, in one amount by weight between 20 mg and 150 mg, optionally comprised between 30 mg and 125 mg, more optionally comprised between 40 mg and 100 mg;
- opaque wax, in one amount by weight comprised between 10 mg and 30 mg, optionally between 15 mg and 25 mg, more optionally equal to 20 mg;
- a polymeric composition comprising polyurethane, in one amount by weight comprised between 30 mg and 50 mg, optionally between 35 mg and 45 mg, more optionally equal to 40 mg;
- isopropyl alcohol, in one amount by weight comprised between 30 mg and 100 mg, optionally between 40 mg and 90 mg, more optionally between 50 mg and 80 mg;
- a graphite-based liquid solution, in one amount by weight between 30 mg and 100 mg, optionally between 40 mg and 90 mg, more optionally between 50 mg and 80 mg;
- animal casein, in one amount by weight comprised between 25 mg and 75 mg, optionally between 30 mg and 70 mg, more optionally between 35 mg and 65 mg;
- catalyzing polyaziridine, in one amount by weight between 3 mg and 12 mg, optionally between 4 mg and 11 mg, more optionally between 5 and 10 mg.

According to another aspect of the invention, said graphite-based liquid solution can comprise, by percentage weight:

- protein, optionally casein, between 10 % and 20%, optionally equal to 15%,
- graphite powder, between 50 % and 70%, optionally equal to 60%,
- oils of animal or vegetable origin, between 3% and 7%, optionally equal to 5%,
- distilled water, between 3 % and 8%, optionally equal to 5%, and
- casein between, between 10 % and 20%, optionally equal to 15%,

wherein the above said amounts by percentage weight of said components of said graphite-based liquid solution can vary in said intervals in such a way that their sum is always equal to 100%.

According to a further aspect of the invention, said graphite powder can comprise graphite granules, wherein the distribution curve of the dimensions of said granules is represented by the following indicators:

$D^{10}$ = 3-6 micron;

$D^{50}$= 10-25 micron;

$D^{90}$= 50-70 micron;

where $D^{10}$, $D^{50}$ and $D^{90}$ are indicators that represent the values of the diameters of said granules of said graphite powder, for weight percentage of 10%, 50% and 90%, respectively.

According to an additional aspect of the invention, said mixture can also comprise at least one pigment in one amount by weight, per square meter of said at least one surface S of said leather layer to be treated, comprised between 10 mg and 40 mg, optionally comprised between 15 mg and 35 mg, more optionally comprised between 20 and 30 mg, wherein said at least one pigment can be optionally a charcoal powder-based pigment.

It is also an object of the present invention a method for treatment of a leather layer having at least one surface S, said method comprising or consisting of the following operational steps:

A. covering said at least one surface S of said leather layer with said mixture according to any previous claim;

B. drying said at least one surface S of said layer;

C. covering said at least one surface S of said leather layer with said mixture according to any previous claim; and

D. drying said at least one surface S di said leather layer.

According to another aspect of the invention, said step can comprise spraying, optionally uniformly, said mixture on said at least one surface S of said leather layer with a delivery pressure comprised between 0.5 and 0.8 atmospheres, for a spraying interval comprised between 30 and 50 seconds, optionally equal to 40 seconds, wherein said mixture can be at room temperature and wherein said step C can be equal to said step A.

According to a further aspect of the invention, said step B can comprise drying said layer of said leather, optionally through steam, at a temperature comprised between 60 and 90°C, optionally comprised between 70 and 80°C, for a drying interval comprised between 20 and 40 seconds, optionally equal to 30 seconds, and wherein said step D can be equal to said step B.

According to an additional aspect of the invention, when said mixture is obtained according to claim 4, wherein said steps A to D are carried out at least three times.

According to another aspect of the invention, when said mixture does not comprise at least one pigment, said steps A to D are carried out at least three times and said method can comprise, at the end of the last executed step D, at least one step of traditional dyeing D1 of said at least one surface S di said leather layer, optionally through spraying.

According to a further aspect of the invention, said method can further comprise the following operational steps, after the last executed step D or step D1, if D1 carried out after step D:

E. carrying out on said leather layer at least one first finishing procedure, configured for further fixing said mixture to said leather layer; and/or

F. carrying out on said leather layer at least one second finishing procedure, configured for making said leather layer soft to the touch.

According to an additional aspect of the invention, said first finishing procedure can comprise the following sub-steps:

E.1 covering said at least one surface S of said leather layer by spraying, optionally uniformly, at least one first nitrocellulose aqueous emulsion, wherein said spraying is carried out at a delivery pressure comprised between 0.5 and 0.8 atmospheres, with said at least one first nitrocellulose aqueous emulsion at room temperature, for a spraying interval comprised between 30 and 50 seconds, optionally equal to 40 seconds;

E.2 drying, optionally through steam, said at least one surface S of said leather layer, at a temperature comprised between 60°C and 90°C, optionally comprised between 70°C and 80°C, for a drying interval comprised between 20 and 40 seconds, optionally equal to 30 seconds; E.3. repeating once said sub-step E.1; and

E.4 repeating once said sub-step E.2.

According to another aspect of the invention, said at least one first nitrocellulose aqueous emulsion can comprise, by percentage weight:

- distilled water, between 3% and 7%, optionally equal to 5%;
- nitrocellulose powder, between 40% and 60%, optionally equal to 50%;
- emulsifiers, of any type suitable to keep the abovesaid nitrocellulose powder into emulsion, between 3% and 7%, optionally equal to 5%; and
- alcohols, optionally ethyl alcohol or isopropyl alcohol, between 30% and 50%, optionally equal to 40%, wherein said amounts by percentage weight of said components of said first nitrocellulose aqueous emulsion vary within said percentage intervals in such a way that their sum is always equal to 100%.

According to a further aspect of the invention, said at least one second finishing procedure can comprise the following sub-steps:

F.1 covering said at least one surface S of said leather layer, by spraying, optionally uniformly, at least one second hydro-emulsion, wherein said spraying is carried out at a delivery pressure comprised between 0.5 and 0.8 atmospheres, with said at least one second hydro-emulsion at room temperature, for a spraying interval comprised between 30 and 50 seconds, optionally equal to 40 seconds; F.2 drying, optionally by steam, said at least one surface S di said leather layer, at a temperature comprised between 60°C and 90°C, optionally comprised between 70°C and 80°C, for a drying interval comprised between 20 and 40 seconds, optionally equal to 30 seconds; F.3. repeating once said sub-step F.1; F.4 repeating once said sub-step F.2; and F.5 leaving to rest said leather layer so finished for a resting interval, optionally not less than one hour.

According to an additional aspect of the invention, said at least one second hydro-emulsion can comprise, per square meter of said at least one surface S of said leather layer to be finished:

- distilled water, in one amount by weight comprised between 80 mg and 120 mg, optionally comprised between 90 mg and 110 mg, more optionally equal to 100 mg;
- one fat touch feel modifier, in one amount by weight comprised between 20 mg and 30 mg, optionally comprised between 23 mg and 27 mg, more optionally equal to 25 mg; and
- one silicone-based touch feel modifier, in one amount by weight comprised between 4 mg and 8 mg, optionally comprised between 5 mg and 7 mg, more optionally equal to 6 mg.

According to another aspect of the invention, said method can comprise one step G of pressing said leather layer thus treated and finished, at a pressure comprised between 35 and 45 atmospheres, optionally equal to 40 atmospheres, at a temperature comprised between 100 and 120 °C, optionally equal to 110°C, for a pressing interval comprised between 1 and 15 seconds, optionally comprised between 2 and 10 seconds.

The present invention will now be described, for illustrative but not limiting purposes, according to preferred embodiments thereof, with particular reference to the Figures of the attached drawings, wherein:

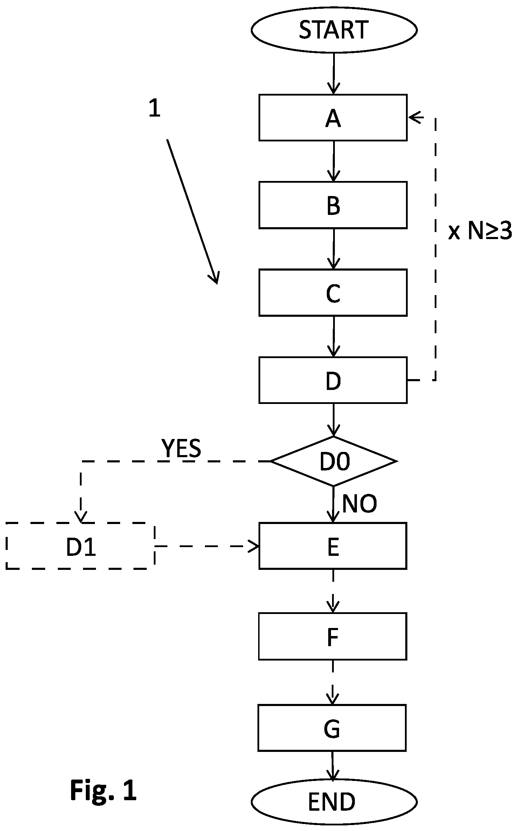

Figure 1 shows a flowchart of the main steps of the leather treatment method according to the present invention;

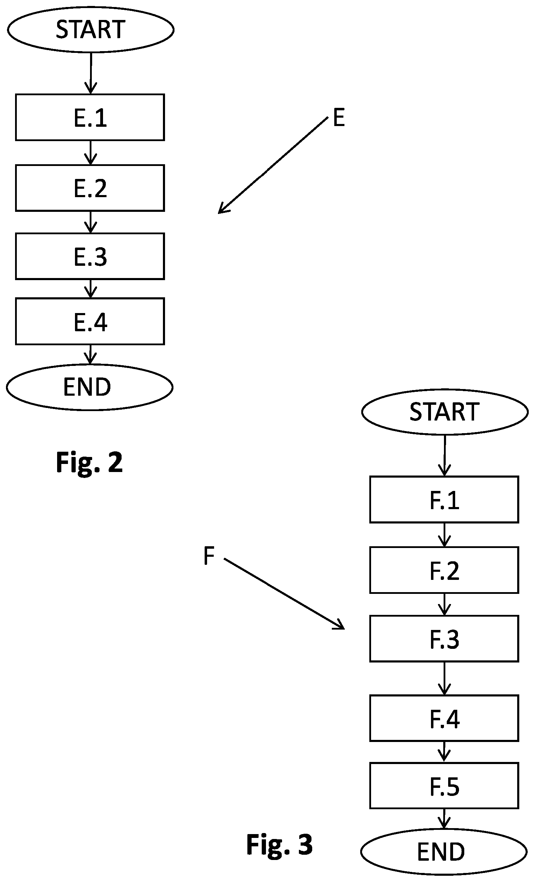

Figure 2 is a flowchart of a first finishing procedure of the invention;
Figure 3 illustrates a flowchart of a second finishing procedure of the invention; and
Figure 4 shows in a Table some results of experimental tests carried out with reference to the method of the invention.

Before going into the merit of the present invention, it should be remembered that leather, is classified based on various criteria which may concern, for example, the type of tanning, the layer of the epidermis of the animal used, the type of animal from which the leather is obtained and the finishing degree, as well as based on the cut and shape or use.
In view of this, it is pointed out that the present invention is advantageously applicable to the sector of leather layers processing:

- of bovine or sheep and goat origin, in particular of veal, sheep, goat or crossbreed,
- semi-finished, i.e. not further treated or in the natural state, after the pre-tanning and tanning process, and
- grain side, i.e. the part of the skin that originally included the animal's hair.

In any case, the present invention can also be used for treatment of a leather layer of different origin and/or on the split side.
It is a specific object of the present invention a mixture, configured to be used in a treatment method of at least one layer of the abovesaid leather having one surface S, comprising, per square meter of said surface S to be treated:

- distilled water, in one amount by weight between 20 mg and 150 mg, optionally comprised between 30 mg and 125 mg, more optionally comprised between 40 mg and 100 mg;
- opaque wax, in one amount by weight comprised between 10 mg and 30 mg, optionally between 15 mg and 25 mg, more optionally equal to 20 mg;
- a polymeric composition comprising polyurethane, in one amount by weight comprised between 30 mg and 50 mg, optionally between 35 mg and 45 mg, more optionally equal to 40 mg;
- isopropyl alcohol, in one amount by weight comprised between 30 mg and 100 mg, optionally between 40 mg and 90 mg, more optionally between 50 mg and 80 mg;
- a graphite-based liquid solution, in one amount by weight between 30 mg and 100 mg, optionally between 40 mg and 90 mg, more optionally between 50 mg and 80 mg;
- animal casein, in one amount by weight comprised between 25 mg and 75 mg, optionally between 30 mg and 70 mg, more optionally between 35 mg and 65 mg; and
- catalyzing polyaziridine, in one amount by weight between 3 mg and 12 mg, optionally between 4 mg and 11 mg, more optionally between 5 and 10 mg.

According to a preferred embodiment of the invention, the mixture opaque wax comprises a solution of filtered natural waxes, of which (in percentage weight): candle wax between 15% and 25%, optionally equal to 20%, and cresol waxes between 25% and 35%, optionally equal to 30%. The opaque wax also comprises an anionic emulsifier between 3% and 7%, optionally equal to 5%, configured for preventing the aforementioned waxes of different types from remaining separate from each other. One example of an emulsifier suitable for the purpose is SILASTOL R687, commercially distributed by the German company Schill+Seilacher GmbH. The abovementioned opaque wax also comprises distilled water between 25% and 35%, optionally 30%, and silica between 10% and 20%, optionally 15%. The above quantities in percentage by weight of the components of the opaque wax can vary in the ranges indicated above in such a way that their sum is always equal to 100%. Opaque wax has the consistency of an opaque viscous liquid and gives the mixture the ability to make the surface S of the aforementioned leather layer uniform and soft, therefore pleasant to the touch.

The polymeric compound comprising polyurethane of the mixture according to the invention, in the jargon of the sector also called opaque polyurethane, is a polymeric compound with the addition of silica. More specifically, it comprises powdered silica in a percentage weight between 15% and 25%, optionally equal to 20%, acrylic polymers (of any type as long as they are not cationic) in a percentage weight between 25% and 35% , optionally equal to 30%, aliphatic polyurethanes having percentage weight between 15% and 25%, optionally equal to 20%, distilled water of percentage weight between 20% and 30%, optionally equal to 25%, thickeners in percentage weight between 3% and 7%, optionally equal to 5%, for example ADDENSANTE PER COMPOUND marketed by the Italian company TICHEM Srl and, optionally, perfumes. The purpose of using perfumes, in quantities between 0 and 5%, is to make the smell of the polymeric compound comprising polyurethane pleasant, and keep any parasites at distance. The above quantities by percentage weight of the components of the polymeric compound comprising polyurethane can vary in the ranges indicated above so that their sum is always equal to 100%. The polymeric compound comprising polyurethane in the mixture of the present invention increases the mechanical resistance of leather. It also sanitizes the treated leather layer and increases its softness to touch.

With reference to the graphite-based liquid solution, according to a preferred embodiment of the invention, it comprises a graphite powder in protein binder solution. More particularly, graphite-based liquid solution comprises proteins, for example casein, in percentage weight between 10 % and 20%, optionally equal to 15%, graphite powder in percentage weight between 50 % and 70%, optionally equal to 60%, oils of animal or vegetable origin, optionally already partly emulsified with very small quantities of emulsifier such as the aforementioned Silastol R687, in a percentage weight between 3% and 7%, optionally equal to 5%, distilled water, in percentage weight between 3 % and 8%, optionally equal to 5%, and casein in percentage weight between, between 10 % and 20%, optionally equal to 15%. The above said amounts by percentage weight of said components of said graphite-based liquid solution can vary in said intervals in such a way that their sum is always equal to 100%. The graphite powder also comprises graphite granules, wherein the distribution curve of the dimensions of the granules or Particle Size Distribution (PSD), according to a particularly advantageous embodiment of the invention, can be represented by the following indicators

$D^{10}$ = 3-6 micron;
$D^{50}$= 10-25 micron;
$D^{90}$= 50-70 micron;
where $D^{10}$, $D^{50}$ and $D^{90}$ are indicators that represent the values of the diameters of the granules of said graphite powder, for weight percentage of 10%, 50% and 90%, respectively. In other words, the values of the $D^{10}$, $D^{50}$ e $D^{90}$ indices show that 10%, 50% and 90% of the analyzed granules have a diameter lower than the corresponding micron value indicated, i.e. lower than 3-6 microns, lower than 10-25 microns and lower than 50-70 microns, respectively. The graphite-based liquid solution gives the mixture of present invention the ability to render the treated leather layer more resistant to mechanical stresses and more antibacterial, as will also be seen in the following.

The catalyzing polyaziridine comprises 2-ethyl-2-[[3-(2-methylaziridin-1-yl)propionyl]methyl]propane-1,3-diyl bis(2-methylaziridine-1-propionate) in percentage weight equal to 100%. An example of a polyaziridine catalyst which can be employed in the mixture of the present invention is given by the product NITROFIX 7732 by Chemical S&G s.r.l. it gives the mixture of the present invention the ability to make the treated leather layer more impermeable to water and solvents.

Optionally, the mixture of the present invention can be pigmented and therefore can comprise at least one pigment, for example in an amount by weight between 10 mg and 40 mg, optionally between 15 mg and 35 mg, more optionally between 20 and 30 mg per square meter of surface S of the leather layer to be treated.

According to a preferred variant of the invention, the pigment is a pigment based on Coal powder.

The mixture above can be advantageously used in a treatment method of one leather layer s. Such method, which also forms part of the present invention, is indicated in the enclosed Figures with reference number 1 and comprises at least the following operational steps:

A. covering said at least one surface S of said leather layer with said at least one mixture as above described;
B. drying said at least one surface S of said leather layer;
C. covering again said at least one surface S of said leather layer with said at least one mixture as above described; and

D. drying again said at least one surface S of said leather layer.

According to an advantageous aspect of the invention, step A of method 1 comprises spraying, optionally uniformly, the mixture above on the surface S of said leather layer, with a delivery pressure comprised between 0.5 and 0.8 atmospheres, for a spraying interval comprised between 30 and 50 seconds, optionally equal to 40 seconds. When sprayed, the mixture is at room temperature.

Step B of invention method 1 comprises drying, optionally through steam, at a temperature between 60 and 90°C, optionally comprised between 70 and 80°C, the leather layer on which the mixture has been sprayed. The drying step of the leather layer is carried out for a drying interval comprised between 20 and 40 seconds, optionally equal to 30 seconds.

Step C of invention method 1 is equal to step A while step D of method 1 is equal to step B.

At the end of step D, the leather layer treated with the mixture according to the present invention is completely uniformly covered with it, and shows high characteristics of mechanical resistance and antibacterial characteristics.

According to a preferred embodiment of the invention, steps A to D of method 1 can be performed for a number N of times at least equal to or greater than three, so as to ensure that the surface S of the treated leather layer is completely uniformly covered with mixture. At the end of step D, the treated leather layer can rest for a prefixed rest interval, for example equal to one hour. However, the person skilled in the art will easily understand that the duration of that interval can vary at will, as long as the leather leaving step D reaches room temperature before being subjected again to a cycle A-D or to the subsequent processing steps.

When the mixture used in the method is not pigmented (step D0), at the end of last executed step D, method 1 optionally comprises one traditional dyeing step (step D1) of leather layer surface S, optionally through spraying. The traditional dyeing step is intended to confer the treated leather layer a color different from the typical dark grey color that the mixture according to the invention, with no pigment, would confer thereto. The possible colors are the most varied, as long as they are not white or however too light, depending on the color of the starting leather layer.

With reference to steps A to D described above, it should be noted that they can be performed for example in a known type of leather dyeing station, usually comprising a conveyor belt and two treatment cabins. The conveyor belt is configured to receive the leather layer, which is stretched on the conveyor belt, and to move it between a first treatment cabin, wherein steps A and B of the invention method are carried out under the above indicated conditions, and a second treatment cabin, wherein steps C and D of the invention method are carried out.

Each treatment cabin can comprise a first working area comprising for example a plurality of, optionally eight, spray guns, configured to deliver the above mixture under pressure, optionally uniformly, and a second working area comprising, for example, a steam oven, wherein the drying of the leather layer covered with mixture takes place.

According to a preferred embodiment of invention method 1 described above, the leather layer is transported through a dyeing station of the type mentioned above for at least three times. Obviously, the dyeing station, which is not the object of the present invention, could be configured also differently and could for example comprise a conveyor belt configured to move the leather layer between six treatment cabins, divided into pairs of two, wherein, steps A to D are carried out in each pair of cabins.

Going back to method 1 of the present invention, this comprises at least carrying out on the leather layer so covered with mixture, at least a first finishing procedure, in order to further fix the mixture of the leather layer (step E).

This step of invention method 1 comprises the following sub-steps:

E.1 covering the surface S of the leather layer by spraying at least one first nitrocellulose aqueous emulsion, in technical jargon also called nitro-emulsion, wherein the spraying is carried out at a delivery pressure comprised between 0.5 and 0.8 atmospheres, with the first nitrocellulose aqueous emulsion at room temperature, for a spraying interval comprised between 30 and 50 seconds, optionally equal to 40 seconds;

E.2 drying, optionally through steam, the surface S of the leather layer, at a temperature comprised between 60°C and 90°C, optionally comprised between 70°C and 80°C, for a drying interval comprised between 20 and 40 seconds, optionally equal to 30 seconds; and then

E.3. repeating sub-step E.1 once; and

E.4 repeating sub-step E.2 once.

The first nitrocellulose aqueous emulsion used at method step E comprises, according to a preferred embodiment of the invention:

- distilled water, in an amount by percentage weight between 3% and 7%, optionally equal to 5%;
- nitrocellulose powder, in an amount by percentage weight between 40% and 60%, optionally equal to 50%;
- emulsifiers, of any type suitable to keep the abovesaid nitrocellulose powder into emulsion, in an amount by percentage weight between 3% and 7%, optionally equal to 5%; and

- alcohols, for example ethyl alcohol or isopropyl alcohol, in an amount by percentage weight between 30% and 50%, optionally equal to 40%.

The abovesaid amounts by percentage weight of said components of the first nitrocellulose aqueous emulsion vary within the intervals above, in such a way that their sum is always equal to 100%.

This first aqueous emulsion of nitrocellulose generates on leather a surface that is soft to the touch, has medium brightness and, according to the method of the present invention, can be diluted according to the desired ratios to be applied on the leather layer also at the subsequent steps of the method of the present invention present invention.

Also in this case it should be noted that step E of method 1 can be performed in a known type of leather dyeing station, of the type described above with reference to phases A to D of the invention method. In this case, therefore, step E would involve a single passage of the leather layer inside the dyeing station.

It goes without saying that, if the same dyeing station were used both for carrying out steps A to D and for step E, a resting time interval should be foreseen between the last executed method step D and step E, for example comprised between 10 and 30 minutes, optionally equal to 20 minutes, necessary for replacing the mixture according to the invention with the first aqueous emulsion of nitrocellulose, in the dyeing station, and the eventual cleaning of the hydraulic circuit for dispensing them.

The same applies if the same dyeing station was used both for carrying out phases A to D and for traditional dyeing phase D1. A resting time interval should be foreseen between the last executed method step D and step D1, for example between 10 and 30 minutes, optionally equal to 20 minutes, necessary for replacement, in the dyeing station, of the mixture according to the invention with a pigmented mixture and the possible cleaning of the hydraulic circuit for supplying them. Obviously the above remains valid also in the transition between method step D1 and step E.

Advantageously, method 1 of the present invention can also comprise the execution on the leather layer, of at least a second finishing procedure, aimed at making it soft to the touch (step F).

This step of method 1 comprises the following sub-steps:

F.1 covering the surface S of the leather layer, by spraying at least one second hydro-emulsion, wherein the spraying is carried out at a delivery pressure comprised between 0.5 and 0.8 atmospheres, with the second hydro-emulsion at room temperature, for a spraying interval comprised between 30 and 50 seconds, optionally equal to 40 seconds;

F.2 drying, optionally by steam, the surface S of the said leather layer, at a temperature comprised between 60°C and 90°C, optionally comprised between 70°C and 80°C, for a drying interval comprised between 20 and 40 seconds, optionally equal to 30 seconds;

F.3. repeating once sub-step F.1;

F.4 repeating once sub-step F.2; and

F.5 leaving the so finished leather layer to rest, for at least one hour.

The second hydro-emulsion used in the invention method 1 comprises, according to a preferred embodiment of the invention, per square meter of surface S the leather layer to be finished:

- distilled water, in one amount by weight comprised between 80 mg and 120 mg, optionally comprised between 90 mg and 110 mg, more optionally equal to 100 mg;
- one fat touch feel modifier, for example the Modifier n.663 made commercially available by the company Chemical S&G s.r.l., in one amount by weight comprised between 20 mg and 30 mg, optionally comprised between 23 mg and 27 mg, more optionally equal to 25 mg; and
- one silicone-based touch feel modifier, for example the Modifier n.6621 made commercially available by the company Chemical S&G s.r.l., in one amount by weight comprised between 4 mg and 8 mg, optionally comprised between 5 mg and 7 mg, more optionally equal to 6 mg.

The fat touch feel modifier included in the second hydro-emulsion comprises, for example, the following amounts by percentage weight of:

- beeswax between 25% and 35%, optionally equal to 30%,
- corn starch between 15% and 25%, optionally equal to 20%,
- distilled water between 25% and 35%, optionally equal to 30%,
- one emulsifier, for example the aforementioned SILASTOL R687, between 3% and 7%, optionally equal to 5%,
- silicone oil between 10% and 15%, optionally 12%, e
- oils of natural or vegetable origin, between 1% and 5%, optionally equal to 3%,

such that their sum is 100%. In other words, the amounts in percentage weight of the components of the fat touch feel modifier can vary in the ranges indicated above, such that their sum is always equal to 100%.

In addition, the fat touch feel modifier can also comprise trace amounts of diethylenetriamine and fatty acids such as tall oil and dequaternized benzyl chlorine.

The fat touch feel modifier gives the leather treated with the second hydro-emulsion a pleasant slippery and powdery feel.

The silicone-based touch feel modifier comprises metalethyl chlorine and silicone alcohol in percentages between 55% and 67% (metalethyl chlorine) and between 45% and 33% (silicone alcohol), respectively. As above, the percentage weight amounts of the components of the silicone-based touch feel modifier can vary within the ranges indicated above, such that their sum is always equal to 100%.

At the end of step E or F the method of the present invention comprises step G of pressing the thus treated and finished leather layer, at a pressure between 35 and 45 atmospheres, optionally equal to 40 atmospheres, at a temperature between 100 and 120 °C, optionally equal to 110°C, for a pressing interval between 1 and 15 seconds, optionally between 2 and 10 seconds.

Then, the leather layer is sent to subsequent processing stations for selection, measurement, and packaging.

With the mixture and the treatment method described above, the problems represented in the introduction are solved.

The mixture described above, applied to a leather layer according to the steps of method 1 allows obtaining a leather layer having high standards of antibactericity and mechanical resistance, soft to the touch, in various colors and cheaper, compared to traditional methods that use graphene for the treatment of leather.

With particular reference to the antibacterial properties of the leather layer obtained according to method 1 of the present invention, it is noted that some preliminary laboratory tests were carried out according to the ISO 20743:2013 method "Determination of antibacterial activity of textile products", on a layer S of sheep and goat leather, tanned with chrome according to a traditional method (for example as described in the article "HEAVY METAL CONTENTS OF BOOTEE LEATHERS TANNED WITH DIFFERENT PROCESS RECIPES" by Hüseyin Ata KARAVANA et al., TEKSTIL ve KONFEKSIYON 3/2011 , 305-310) and subsequently subjected to the treatment method of the invention, for determining the concentration of microorganisms such as Staphylococcus aureus and Klebsiella pneumoniae contained therein.

The measurements were performed both on the grain side and on the split side of the tested leather layer and the results thereby obtained were compared with the concentrations of these bacteria in a reference sample of leather having the same origin (sheep and goat), subjected to the same chrome tanning treatment but not to the subsequent invention treatment method.

The specifications of the preliminary tests, conducted according to the abovementioned ISO 20743:2013 method, can be summarized as follows:

· Bacteria of interest: Staphylococcus aureus ATCC 6538, Klebsiella pneumoniae ATCC 4352 · Inoculum: 0.2 mL of bacterial suspension, $1 \times 10^5$ CFU/mL

diluted in nutrient broth.
· Contact time: 24 hours at 37° C.
· Type of measurement: Plate count method.
· Neutralizer: 20 ml.

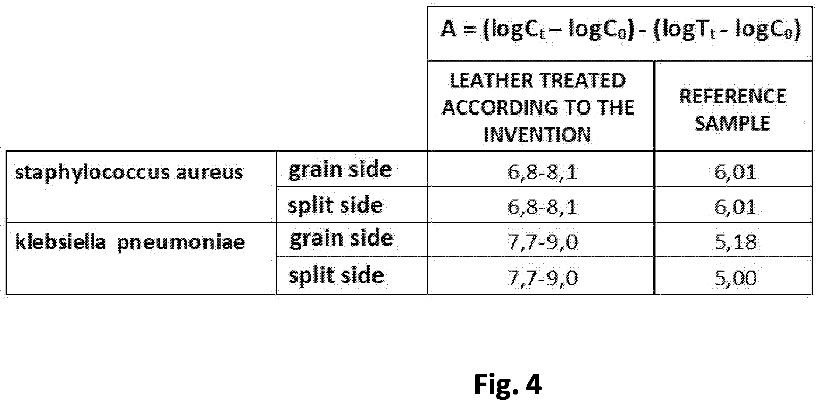

The summary table of Figure 4 shows, for the reference sample and the two leather samples obtained from layer S of sheep and goat tanned according to the aforementioned traditional method and then subjected to the treatment of the invention (grain side and split side), all having the same thickness between 0.9 mm and 1.1 mm, the antibacterial activity (A) determined according to relationship:

$$A = (\log C_t - \log C_0) - (\log T_t - \log C_0)$$

where:

$C_t$ = average value of the number of bacteria obtained from reference sample, after 24 hours of contact.
$C_0$ = average value of the number of bacteria obtained from reference sample immediately after inoculation.
$T_t$ = average value of the number of bacteria recovered from the sample, after 24 hours of contact.

As can be seen, both leather samples tested 24 hours after inoculation show greater antibacterial activity (A) than the reference sample.

In particular, the increase in the antibacterial properties of the tested leather samples (both from the grain side and from the split side) treated with the method of the present invention, compared to the reference sample, was between about 12% and 33% for Staphylococcus aureus ATCC 6538.

For Klebsiella pneumoniae ATCC 4352, the increase in antibacterial properties of the tested skin samples, treated with the method of the present invention and compared to the reference sample, was even more significant. In fact, for the sample tested on the grain side, the antibactericity increase was between about 49% and 74%, while in the sample tested on the split side, the antibactericity increase was between about 54% and 80%.

In the above, the preferred embodiments have been described and variations of the present invention have been suggested as defined by the appended claims.

**Claims**

1. Mixture for treatment of one leather layer having at least one surface S and comprising, per square meter of said surface S to be treated:

   - distilled water, in one amount by weight between 20 mg and 150 mg, optionally comprised between 30 mg and 125 mg, more optionally comprised between 40 mg and 100 mg;

- opaque wax, in one amount by weight comprised between 10 mg and 30 mg, optionally between 15 mg and 25 mg, more optionally equal to 20 mg;

- a polymeric composition comprising polyurethane, in one amount by weight comprised between 30 mg and 50 mg, optionally between 35 mg and 45 mg, more optionally equal to 40 mg;

- isopropyl alcohol, in one amount by weight comprised between 30 mg and 100 mg, optionally between 40 mg and 90 mg, more optionally between 50 mg and 80 mg;

- a graphite-based liquid solution, in one amount by weight between 30 mg and 100 mg, optionally between 40 mg and 90 mg, more optionally between 50 mg and 80 mg;

- animal casein, in one amount by weight comprised between 25 mg and 75 mg, optionally between 30 mg and 70 mg, more optionally between 35 mg and 65 mg;

- catalyzing polyaziridine, in one amount by weight between 3 mg and 12 mg, optionally between 4 mg and 11 mg, more optionally between 5 and 10 mg.

2. Mixture according to claim 1, wherein said graphite-based liquid solution comprises, by percentage weight:

- protein, optionally casein, between 10 % and 20%, optionally equal to 15%,
- graphite powder, between 50 % and 70%, optionally equal to 60%,
- oils of animal or vegetable origin, between 3% and 7%, optionally equal to 5%,
- distilled water, between 3 % and 8%, optionally equal to 5%, and
- casein between, between 10 % and 20%, optionally equal to 15%,

wherein the above said amounts by percentage weight of said components of said graphite-based liquid solution can vary in said intervals in such a way that their sum is always equal to 100%.

3. Mixture according to claim 2, wherein said graphite powder comprises graphite granules, wherein the distribution curve of the dimensions of said granules is represented by the following indicators:

$D^{10}$ = 3-6 micron;
$D^{50}$ = 10-25 micron;
$D^{90}$ = 50-70 micron;
where $D^{10}$, $D^{50}$ and $D^{90}$ are indicators that re-

present the values of the diameters of said granules of said graphite powder, for weight percentage of 10%, 50% and 90%, respectively.

4. Mixture according to any claim 1 to 3, further comprising at least one pigment in one amount by weight, per square meter of said at least one surface S of said leather layer to be treated, comprised between 10 mg and 40 mg, optionally comprised between 15 mg and 35 mg, more optionally comprised between 20 and 30 mg, wherein said at least one pigment is optionally a charcoal powder-based pigment.

5. Method (1) for treatment of a leather layer having at least one surface S, said method comprising or consisting of the following operational steps:

A. covering said at least one surface S of said leather layer with said mixture according to any previous claim;
B. drying said at least one surface S of said layer;
C. covering said at least one surface S of said leather layer with said mixture according to any previous claim; and
D. drying said at least one surface S of said leather layer.

6. Method (1) according to claim 5, wherein said step A comprises spraying, optionally uniformly, said mixture on said at least one surface S of said leather layer with a delivery pressure comprised between 0.5 and 0.8 atmospheres, for a spraying interval comprised between 30 and 50 seconds, optionally equal to 40 seconds, wherein said mixture is at room temperature and wherein said step C is equal to said step A.

7. Method (1) according to claim 5 o 6, wherein said step B comprises drying said layer of said leather, optionally through steam, at a temperature comprised between 60 and 90°C, optionally comprised between 70 and 80°C, for a drying interval comprised between 20 and 40 seconds, optionally equal to 30 seconds, and wherein said step D is equal to said step B.

8. Method (1) according to any claim 5 to 7, when said mixture is obtained according to claim 4, wherein said steps A to D are carried out at least three times.

9. Method (1) according to any claim 5 to 7, when said mixture is obtained according to any claim 1 to 3, wherein said steps A to D are carried out at least three times and wherein said method (1) comprises, at the end of the last executed step D, at least one step of traditional dyeing D1 of said at least one surface S di said leather layer, optionally through spraying.

**10.** Method (1) according to any claim 5 to 9, further comprising the following operational steps, after the last executed step D or step D1, if D1 carried out after step D:

E. carrying out on said leather layer at least one first finishing procedure, configured for further fixing said mixture to said leather layer; and/or
F. carrying out on said leather layer at least one second finishing procedure, configured for making said leather layer soft to the touch.

**11.** Method (1) according to claim 10, wherein said first finishing procedure comprises the following sub-steps:

E.1 covering said at least one surface S of said leather layer by spraying, optionally uniformly, at least one first nitrocellulose aqueous emulsion, wherein said spraying is carried out at a delivery pressure comprised between 0.5 and 0.8 atmospheres, with said at least one first nitrocellulose aqueous emulsion at room temperature, for a spraying interval comprised between 30 and 50 seconds, optionally equal to 40 seconds;
E.2 drying, optionally through steam, said at least one surface S of said leather layer, at a temperature comprised between 60°C and 90°C, optionally comprised between 70°C and 80°C, for a drying interval comprised between 20 and 40 seconds, optionally equal to 30 seconds;
E.3. repeating once said sub-step E.1; and
E.4 repeating once said sub-step E.2.

**12.** Method (1) according to claim 11, wherein said at least one first nitrocellulose aqueous emulsion comprises, by percentage weight:

- distilled water, between 3% and 7%, optionally equal to 5%;
- nitrocellulose powder, between 40% and 60%, optionally equal to 50%;
- emulsifiers, of any type suitable to keep the abovesaid nitrocellulose powder into emulsion, between 3% and 7%, optionally equal to 5%; and
- alcohols, optionally ethyl alcohol or isopropyl alcohol, between 30% and 50%, optionally equal to 40%, wherein said amounts by percentage weight of said components of said first nitrocellulose aqueous emulsion vary within said percentage intervals in such a way that their sum is always equal to 100%.

**13.** Method (1) according to any claim 10 to 12, wherein said at least one second finishing procedure comprises the following sub-steps:

F.1 covering said at least one surface S of said leather layer, by spraying, optionally uniformly, at least one second hydro-emulsion, wherein said spraying is carried out at a delivery pressure comprised between 0.5 and 0.8 atmospheres, with said at least one second hydro-emulsion at room temperature, for a spraying interval comprised between 30 and 50 seconds, optionally equal to 40 seconds;
F.2 drying, optionally by steam, said at least one surface S of said leather layer, at a temperature comprised between 60°C and 90°C, optionally comprised between 70°C and 80°C, for a drying interval comprised between 20 and 40 seconds, optionally equal to 30 seconds;
F.3. repeating once said sub-step F.1;
F.4 repeating once said sub-step F.2; and
F.5 leaving to rest said leather layer so finished for a resting interval, optionally not less than one hour.

**14.** Method (1) according to claim 13, wherein said at least one second hydro-emulsion comprises, per square meter of said at least one surface S of said leather layer to be finished:

- distilled water, in one amount by weight comprised between 80 mg and 120 mg, optionally comprised between 90 mg and 110 mg, more optionally equal to 100 mg;
- one fat touch feel modifier, in one amount by weight comprised between 20 mg and 30 mg, optionally comprised between 23 mg and 27 mg, more optionally equal to 25 mg; and
- one silicone-based touch feel modifier, in one amount by weight comprised between 4 mg and 8 mg, optionally comprised between 5 mg and 7 mg, more optionally equal to 6 mg.

**15.** Method (1) according to any claim 5 to 14, comprising one step G of pressing said leather layer thus treated and finished, at a pressure comprised between 35 and 45 atmospheres, optionally equal to 40 atmospheres, at a temperature comprised between 100 and 120 °C, optionally equal to 110°C, for a pressing interval comprised between 1 and 15 seconds, optionally comprised between 2 and 10 seconds.

**Patentansprüche**

**1.** Mischung zur Behandlung einer Lederschicht mit mindestens einer Oberfläche S, die pro Quadratmeter der zu behandelnden Oberfläche S enthält:

- destilliertes Wasser in einer Menge zwischen 20 mg und 150 mg, optional zwischen 30 mg und 125 mg, noch bevorzugter zwischen 40 mg und 100 mg;

- undurchsichtiges Wachs in einer Menge zwischen 10 mg und 30 mg, optional zwischen 15 mg und 25 mg, noch bevorzugter 20 mg;
- eine Polymerzusammensetzung, die Polyurethan enthält, in einer Menge zwischen 30 mg und 50 mg, optional zwischen 35 mg und 45 mg, noch bevorzugter 40 mg;
- Isopropylalkohol in einer Menge zwischen 30 mg und 100 mg, optional zwischen 40 mg und 90 mg, noch optionaler zwischen 50 mg und 80 mg;
- eine flüssige Lösung auf Graphitbasis in einer Menge zwischen 30 mg und 100 mg, optional zwischen 40 mg und 90 mg, noch bevorzugter zwischen 50 mg und 80 mg;
- tierisches Kasein in einer Menge zwischen 25 mg und 75 mg, optional zwischen 30 mg und 70 mg, noch optionaler zwischen 35 mg und 65 mg;
- katalysierendes Polyaziridin in einer Menge zwischen 3 mg und 12 mg, optional zwischen 4 mg und 11 mg, noch optionaler zwischen 5 und 10 mg.

2. Mischung nach Anspruch 1, wobei die flüssige Lösung auf Graphitbasis in Gewichtsprozent umfasst:

   - Protein, gegebenenfalls Casein, zwischen 10% und 20%, gegebenenfalls gleich 15%,
   - Graphitpulver, zwischen 50% und 70%, gegebenenfalls gleich 60%,
   - Öle tierischen oder pflanzlichen Ursprungs, zwischen 3% und 7%, gegebenenfalls gleich 5%,
   - destilliertes Wasser zwischen 3% und 8%, gegebenenfalls gleich 5%, und
   - Casein zwischen 10% und 20%, gegebenenfalls gleich 15%,

   wobei die oben genannten Gewichtsprozentsätze der Komponenten der flüssigen Lösung auf Graphitbasis in den genannten Bereichen so variieren können, dass ihre Summe immer 100% beträgt.

3. Mischung nach Anspruch 2, wobei das Graphitpulver Graphitgranulat umfasst, wobei die Verteilungskurve der Abmessungen des Granulats durch die folgenden Indikatoren dargestellt wird:

   $D^{10}$ = 3-6 Mikrometer;
   $D^{50}$ = 10-25 Mikrometer;
   $D^{90}$ = 50-70 Mikrometer;
   wobei $D^{10}$, $D^{50}$ und $D^{90}$ Indikatoren sind, die die Werte der Durchmesser der Körner des Graphitpulvers für einen Gewichtsanteil von 10%, 50% bzw. 90% darstellen.

4. Mischung nach einem der Ansprüche 1 bis 3, die zusätzlich mindestens ein Pigment in einer Menge pro Quadratmeter der mindestens einen zu behandelnden Oberfläche S der Lederschicht von 10 mg bis 40 mg, optional von 15 mg bis 35 mg, noch optionaler von 20 bis 30 mg enthält, wobei das mindestens eine Pigment optional ein Pigment auf Basis von Holzkohlepulver ist.

5. Verfahren (1) zur Behandlung einer Lederschicht mit mindestens einer Oberfläche S, wobei das Verfahren die folgenden Verfahrensschritte umfasst oder aus diesen besteht:

   A. Bedecken der mindestens einen Oberfläche S der Lederschicht mit der Mischung gemäß einem der vorherigen Ansprüche;
   B. Trocknen der mindestens einen Oberfläche S der Schicht;
   C. Bedecken der mindestens einen Oberfläche S der Lederschicht mit der Mischung gemäß einem der vorherigen Ansprüche; und
   D. Trocknen der mindestens einen Oberfläche S der Lederschicht.

6. Verfahren (1) gemäß Anspruch 5, wobei der Schritt A das Sprühen, gegebenenfalls gleichmäßig, der Mischung auf die mindestens eine Oberfläche S der Lederschicht mit einem Förderdruck zwischen 0,5 und 0,8 Atmosphären für eine Sprühintervall zwischen 30 und 50 Sekunden, gegebenenfalls gleich 40 Sekunden, umfasst, wobei die Mischung Raumtemperatur aufweist und wobei der Schritt C gleich dem Schritt A ist.

7. Verfahren (1) nach Anspruch 5 oder 6, wobei der Schritt B das Trocknen der Lederschicht, gegebenenfalls mit Dampf, bei einer Temperatur zwischen 60 und 90°C, gegebenenfalls zwischen 70 und 80°C, während eines Trocknungsintervalls zwischen 20 und 40 Sekunden, gegebenenfalls gleich 30 Sekunden, umfasst, und wobei der Schritt D gleich dem Schritt B ist.

8. Verfahren (1) nach einem der Ansprüche 5 bis 7, wenn die Mischung gemäß Anspruch 4 erhalten wird, wobei die Schritte A bis D mindestens dreimal durchgeführt werden.

9. Verfahren (1) nach einem der Ansprüche 5 bis 7, wenn die Mischung gemäß einem der Ansprüche 1 bis 3 erhalten wird, wobei die Schritte A bis D mindestens dreimal durchgeführt werden und wobei das Verfahren (1) am Ende des zuletzt ausgeführten Schritts D mindestens einen Schritt des herkömmlichen Färbens D1 der mindestens einen Oberfläche S der Lederschicht, gegebenenfalls durch Sprühen, umfasst.

**10.** Verfahren (1) nach einem der Ansprüche 5 bis 9, das nach dem zuletzt ausgeführten Schritt D oder Schritt D1, falls D1 nach Schritt D durchgeführt wurde, die folgenden Arbeitsschritte umfasst:

E. Durchführen mindestens eines ersten Veredelungsvorgangs an der Lederschicht, der dazu ausgelegt ist, die Mischung an der Lederschicht weiter zu fixieren; und/oder
F. Durchführen mindestens eines zweiten Veredelungsvorgangs auf der Lederschicht, der dazu ausgelegt ist, die Lederschicht weich im Griff zu machen.

**11.** Verfahren (1) nach Anspruch 10, wobei der erste Veredelungsvorgang die folgenden Teilschritte umfasst:

E.1 Bedecken der mindestens einen Oberfläche S der Lederschicht durch Sprühen, gegebenenfalls gleichmäßig, mit mindestens einer ersten Nitrocellulose-Wasseremulsion, wobei das Sprühen bei einem Förderdruck zwischen 0,5 und 0,8 Atmosphären mit der mindestens einen ersten Nitrocellulose-Wasseremulsion bei Raumtemperatur für einen Sprühintervall zwischen 30 und 50 Sekunden durchgeführt wird, optional gleich 40 Sekunden;
E.2 Trocknen der mindestens einen Oberfläche S der Lederschicht, optional durch Dampf, bei einer Temperatur zwischen 60°C und 90°C, optional zwischen 70°C und 80°C, für einen Trocknungsintervall zwischen 20 und 40 Sekunden, optional gleich 30 Sekunden;
E.3. einmaliges Wiederholen des Teilschritts E.1; und
E.4 einmaliges Wiederholen des Teilschritts E.2.

**12.** Verfahren (1) nach Anspruch 11, wobei die mindestens eine erste wässrige Nitrocellulose-Emulsion in Gewichtsprozent umfasst:

- destilliertes Wasser, zwischen 3% und 7%, optional gleich 5%;
- Nitrocellulosepulver, zwischen 40% und 60%, optional gleich 50%;
- Emulgatoren, von jeder Art, die geeignet sind, das vorgenannte Nitrocellulosepulver in Emulsion zu halten, zwischen 3% und 7%, optional gleich 5%; und
- Alkohole, gegebenenfalls Ethylalkohol oder Isopropylalkohol, zwischen 30% und 50%, gegebenenfalls gleich 40%, wobei die Gewichtsprozentsätze der Komponenten der ersten Nitrocellulose-Wasseremulsion innerhalb der genannten Prozentbereiche so variieren, dass ihre Summe immer 100% beträgt.

**13.** Verfahren (1) nach einem der Ansprüche 10 bis 12, wobei der mindestens eine zweite Nachbehandlungsvorgang die folgenden Teilschritte umfasst:

F.1 Bedecken der mindestens einen Oberfläche S der Lederschicht durch Sprühen, gegebenenfalls gleichmäßig, mit mindestens einer zweiten Hydroemulsion, wobei das Sprühen bei einem Förderdruck zwischen 0,5 und 0,8 Atmosphären mit der mindestens einen zweiten Hydroemulsion bei Raumtemperatur für eine Sprühzeit zwischen 30 und 50 Sekunden, gegebenenfalls gleich 40 Sekunden, durchgeführt wird;
F.2 Trocknen der mindestens einen Oberfläche S der Lederschicht, gegebenenfalls mit Dampf, bei einer Temperatur zwischen 60°C und 90°C, gegebenenfalls zwischen 70°C und 80°C, für eine Trocknungsdauer zwischen 20 und 40 Sekunden, gegebenenfalls gleich 30 Sekunden;
F.3 einmaliges Wiederholen des Teilschritts F.1;
F.4 einmaliges Wiederholen des Teilschritts F.2; und
F.5 Ruhenlassen der so fertiggestellten Lederschicht für eine Ruhezeit, die optional mindestens eine Stunde beträgt.

**14.** Verfahren (1) nach Anspruch 13, wobei die mindestens eine zweite Hydroemulsion pro Quadratmeter der mindestens einen zu veredelnden Oberfläche S der Lederschicht umfasst:

- destilliertes Wasser in einer Menge zwischen 80 mg und 120 mg, optional zwischen 90 mg und 110 mg, vorzugsweise 100 mg;
- einen Fett-Tastmodifikator in einer Menge zwischen 20 mg und 30 mg, optional zwischen 23 mg und 27 mg, noch bevorzugter gleich 25 mg; und
- einen silikonbasierten Modifikator für das Tastgefühl in einer Menge von 4 mg bis 8 mg, optional zwischen 5 mg und 7 mg, noch bevorzugter 6 mg.

**15.** Verfahren (1) nach einem der Ansprüche 5 bis 14, umfassend einen Schritt G, bei dem die so behandelte und veredelte Lederschicht bei einem Druck zwischen 35 und 45 Atmosphären, optional bei 40 Atmosphären, bei einer Temperatur zwischen 100 und 120°C, optional bei 110°C, für eine Pressdauer zwischen 1 und 15 Sekunden, optional zwischen 2 und 10 Sekunden.

**Revendications**

**1.** Mélange pour le traitement d'une couche de cuir présentant au moins une surface S et comprenant, par mètre carré de ladite surface S à traiter:

- de l'eau distillée, en une quantité en poids comprise entre 20 mg et 150 mg, éventuellement comprise entre 30 mg et 125 mg, plus éventuellement comprise entre 40 mg et 100 mg;
- de la cire opaque, en une quantité en poids comprise entre 10 mg et 30 mg, éventuellement entre 15 mg et 25 mg, plus éventuellement égale à 20 mg;
- une composition polymèrique comprenant du polyuréthane, en une quantité en poids comprise entre 30 mg et 50 mg, éventuellement entre 35 mg et 45 mg, plus éventuellement égale à 40 mg;
- de l'alcool isopropylique, en une quantité en poids comprise entre 30 mg et 100 mg, éventuellement entre 40 mg et 90 mg, plus éventuellement entre 50 mg et 80 mg;
- une solution liquide à base de graphite, en une quantité en poids comprise entre 30 mg et 100 mg, éventuellement entre 40 mg et 90 mg, plus éventuellement entre 50 mg et 80 mg;
- de la caséine animale, en une quantité en poids comprise entre 25 mg et 75 mg, éventuellement entre 30 mg et 70 mg, plus éventuellement entre 35 mg et 65 mg;
- de la polyaziridine catalysante, en une quantité en poids comprise entre 3 mg et 12 mg, éventuellement entre 4 mg et 11 mg, plus éventuellement entre 5 et 10 mg.

2. Mélange selon la revendication 1, dans lequel ladite solution liquide à base de graphite comprend, en pourcentage en poids:

   - une protéine, éventuellement de la caséine, en une quantité comprise entre 10% et 20%, éventuellement égale à 15%,
   - une poudre de graphite, en une quantité comprise entre 50% et 70%, éventuellement égale à 60%,
   - des huiles d'origine animale ou végétale, en une quantité comprise entre 3% et 7%, éventuellement égale à 5%,
   - de l'eau distillée, en une quantité comprise entre 3% et 8%, éventuellement égale à 5%, et
   - de la caséine, en une quantité comprise entre 10% et 20%, éventuellement égale à 15%.

   où les quantités en pourcentage en poids susmentionnées desdits composants de ladite solution liquide à base de graphite peuvent varier dans lesdits intervalles de sorte que leur somme soit toujours égale à 100%.

3. Mélange selon la revendication 2, dans lequel ladite poudre de graphite comprend des granulés de graphite, où la courbe de distribution des dimensions desdits granulés est représentée par les indicateurs suivants:

   $D^{10}$ = 3 à 6 microns;
   $D^{50}$ = 10 à 25 microns;
   $D^{90}$ = 50 à 70 microns,
   où $D^{10}$, $D^{50}$ et $D^{90}$ sont des indicateurs qui représentent les valeurs des diamètres desdits granulés de ladite poudre de graphite, pour un pourcentage en poids de 10%, 50% et 90%, respectivement.

4. Mélange selon l'une des revendications 1 à 3, comprenant en outre au moins un pigment en une quantité en poids, par mètre carré de ladite au moins une surface S de ladite couche de cuir à traiter, comprise entre 10 mg et 40 mg, éventuellement comprise entre 15 mg et 35 mg, plus éventuellement comprise entre 20 et 30 mg, où ledit au moins un pigment est éventuellement un pigment à base de poudre de charbon de bois.

5. Procédé (1) de traitement d'une couche de cuir présentant au moins une surface S, ledit procédé comprenant ou étant constitué des étapes opérationnelles suivantes:

   A. recouvrement de ladite au moins une surface S de ladite couche de cuir avec ledit mélange selon l'une des revendications précédentes;
   B. séchage de ladite au moins une surface S de ladite couche;
   C. recouvrement de ladite au moins une surface S de ladite couche de cuir avec ledit mélange selon l'une des revendications précédentes; et
   D. séchage de ladite au moins une surface S de ladite couche de cuir.

6. Procédé (1) selon la revendication 5, dans lequel ladite étape A comprend la pulvérisation, éventuellement uniforme, dudit mélange sur ladite au moins une surface S de ladite couche de cuir à une pression de refoulement comprise entre 0,5 et 0,8 atmosphère, pendant un intervalle de pulvérisation compris entre 30 et 50 secondes, éventuellement égal à 40 secondes, où ledit mélange est à température ambiante et où ladite étape C est identique à ladite étape A.

7. Procédé (1) selon la revendication 5 ou 6, dans lequel ladite étape B comprend le séchage de ladite couche dudit cuir, éventuellement à la vapeur, à une température comprise entre 60 et 90°C, éventuellement comprise entre 70 et 80°C, pendant un intervalle de séchage compris entre 20 et 40 secondes, éventuellement égal à 30 secondes, et dans lequel ladite étape D est identique à ladite étape B.

**8.** Procédé (1) selon l'une des revendications 5 à 7, lorsque ledit mélange est obtenu selon la revendication 4, dans lequel lesdites étapes A à D sont réalisées au moins trois fois.

**9.** Procédé (1) selon l'une des revendications 5 à 7, lorsque ledit mélange est obtenu selon l'une des revendications 1 à 3, dans lequel lesdites étapes A à D sont réalisées au moins trois fois et où ledit procédé (1) comprend, à la fin de la dernière étape D exécutée, au moins une étape de teinture traditionnelle D1 de ladite au moins une surface S de ladite couche de cuir, éventuellement par pulvérisation.

**10.** Procédé (1) selon l'une des revendications 5 à 9, comprenant en outre les étapes opérationnelles suivantes, après la dernière étape D ou étape D1 exécutée, si D1 a été réalisée après l'étape D:

E. réalisation sur ladite couche de cuir d'au moins une première procédure de finition, configurée pour fixer davantage ledit mélange sur ladite couche de cuir; et/ou
F. réalisation sur ladite couche de cuir d'au moins une seconde procédure de finition, configurée pour rendre ladite couche de cuir douce au toucher.

**11.** Procédé (1) selon la revendication 10, dans lequel ladite première procédure de finition comprend les sous-étapes suivantes:

E.1 recouvrement de ladite au moins une surface S de ladite couche de cuir par pulvérisation, éventuellement uniforme, d'au moins une première émulsion aqueuse de nitrocellulose, où ladite pulvérisation est réalisée à une pression de refoulement comprise entre 0,5 et 0,8 atmosphère, avec ladite au moins une première émulsion aqueuse de nitrocellulose à température ambiante, pendant un intervalle de pulvérisation compris entre 30 et 50 secondes, éventuellement égal à 40 secondes;
E.2 séchage, éventuellement à la vapeur, de ladite au moins une surface S de ladite couche de cuir, à une température comprise entre 60°C et 90°C, éventuellement comprise entre 70°C et 80°C, pendant un intervalle de séchage compris entre 20 et 40 secondes, éventuellement égal à 30 secondes;
E.3 répétition une fois de ladite sous-étape E.1; et
E.4 répétition une fois de ladite sous-étape E.2.

**12.** Procédé (1) selon la revendication 11, dans lequel ladite au moins une première émulsion aqueuse de nitrocellulose comprend, en pourcentage en poids:

- de l'eau distillée, en une quantité comprise entre 3% et 7%, éventuellement égale à 5%;
- une poudre de nitrocellulose, en une quantité comprise entre 40% et 60%, éventuellement égale à 50%;
- des émulsifiants, de tout type permettant de maintenir la poudre de nitrocellulose susmentionnée en émulsion, en une quantité comprise entre 3% et 7%, éventuellement égale à 5%; et
- des alcools, éventuellement de l'alcool éthylique ou de l'alcool isopropylique, en une quantité comprise entre 30% et 50%, éventuellement égale à 40%, où lesdites quantités en pourcentage en poids desdits composants de ladite première émulsion aqueuse de nitrocellulose varient dans lesdits intervalles de pourcentage de sorte que leur somme soit toujours égale à 100%.

**13.** Procédé (1) selon l'une des revendications 10 à 12, dans lequel ladite au moins une seconde procédure de finition comprend les sous-étapes suivantes:

F.1 recouvrement de ladite au moins une surface S de ladite couche de cuir, par pulvérisation, éventuellement uniforme, d'au moins une seconde hydro-émulsion, où ladite pulvérisation est réalisée à une pression de refoulement comprise entre 0,5 et 0,8 atmosphère, avec ladite au moins une seconde hydro-émulsion à température ambiante, pendant un intervalle de pulvérisation compris entre 30 et 50 secondes, éventuellement égal à 40 secondes;
F.2 séchage, éventuellement à la vapeur, de ladite au moins une surface S de ladite couche de cuir, à une température comprise entre 60°C et 90°C, éventuellement comprise entre 70°C et 80°C, pendant un intervalle de séchage compris entre 20 et 40 secondes, éventuellement égal à 30 secondes;
F.3 répétition une fois de ladite sous-étape F.1;
F.4 répétition une fois de ladite sous-étape F.2; et
F.5 mise au repos de ladite couche de cuir ainsi finie pendant un intervalle de repos, éventuellement d'au moins une heure.

**14.** Procédé (1) selon la revendication 13, dans lequel ladite au moins une seconde hydro-émulsion comprend, par mètre carré de ladite au moins une surface S de ladite couche de cuir à finir:

- de l'eau distillée, en une quantité en poids comprise entre 80 mg et 120 mg, éventuellement comprise entre 90 mg et 110 mg, plus éventuellement égale à 100 mg;
- un modificateur de sensation tactile gras, en une quantité en poids comprise entre 20 mg et 30 mg, éventuellement comprise entre 23 mg et 27 mg, plus éventuellement égale à 25 mg; et
- un modificateur de sensation tactile à base de silicone, en une quantité en poids comprise entre 4 mg et 8 mg, éventuellement comprise entre 5 mg et 7 mg, plus éventuellement égale à 6 mg.

15. Procédé (1) selon l'une des revendications 5 à 14, comprenant une étape G de pressage de ladite couche de cuir ainsi traitée et finie, à une pression comprise entre 35 et 45 atmosphères, éventuellement égale à 40 atmosphères, à une température comprise entre 100 et 120°C, éventuellement égale à 110°C, pendant un intervalle de pressage compris entre 1 et 15 secondes, éventuellement compris entre 2 et 10 secondes.

**Fig. 1**

START

E.1

E.2

E

E.3

E.4

END

**Fig. 2**

START

F.1

F.2

F

F.3

F.4

**Fig. 3**

F.5

END

| | | $A = (\log C_t - \log C_0) - (\log T_t - \log C_0)$ | |
| --- | --- | --- | --- |
| | | LEATHER TREATED ACCORDING TO THE INVENTION | REFERENCE SAMPLE |
| staphylococcus aureus | grain side | 6,8-8,1 | 6,01 |
| | split side | 6,8-8,1 | 6,01 |
| klebsiella pneumoniae | grain side | 7,7-9,0 | 5,18 |
| | split side | 7,7-9,0 | 5,00 |

**Fig. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 109023985
- CN 105400336
- EP 2954073 A
- US 5759706 A

### Non-patent literature cited in the description

- **HÜSEYIN ATA KARAVANA et al.** HEAVY METAL CONTENTS OF BOOTEE LEATHERS TANNED WITH DIFFERENT PROCESS RECIPES. *TEKSTIL ve KONFEKSIYON*, 2011, vol. 3, 305-310